Europäisches Patentamt

European Patent Office

Office européen des brevets

(11) Veröffentlichungsnummer: **0 289 832**

**A1**

(12) **EUROPÄISCHE PATENTANMELDUNG**

(21) Anmeldenummer: 88106034.7

(22) Anmeldetag: 15.04.88

(51) Int. Cl.4: **B60R 21/02**

(30) Priorität: 06.05.87 DE 8706446 U

(43) Veröffentlichungstag der Anmeldung:
09.11.88 Patentblatt 88/45

(84) Benannte Vertragsstaaten:
**DE ES FR GB IT SE**

(71) Anmelder: **Max Meier GmbH + Co.
Metallwarenfabrik**

**D-7585 Lichtenau-Scherzheim(DE)**

(72) Erfinder: **Meier, Max
Stecketstrasse 16
D-7585 Lichtenau-Scherzheim(DE)**
Erfinder: **Meier, Karl-Heinz
Dumpfental 1
D-7585 Lichtenau-Scherzheim(DE)**

(74) Vertreter: **Dr.-Ing. Hans Lichti Dipl.-Ing. Heiner
Lichti Dipl.-Phys. Dr. Jost Lempert
Postfach 41 07 60 Durlacher Strasse 31
D-7500 Karlsruhe 41(DE)**

(54) Schutzeinrichtung für den Innenraum von Kraftfahrzeugen.

(57) Eine Schutzeinrichtung für Kraftfahrzeuge zur Abtrennung des Fahrerraums von einem dahinter liegenden Transportraum weist ein an den Dachholmen (2) des Fahrzeugs festgelegtes, sich von Dach (3) bis zumindest zur Oberkante der Rückenlehnen (5) der Sitze im Fahrerraum sowie zwischen den Seitenfenstern erstreckendes, auf unterschiedliche Fahrzeug-Innenmaße einstellbares Schutzgitter (7) auf. Um das Schutzgitter in einfacher Weise aus der Gebrauchslage in eine nicht störende, unwirksame Lage bringen zu können, ist das Schutzgitter an seiner oberen Längsseite an horizontalen Achsen (14) schwenkbar gelagert und ist im Bereich des Dachs eine Einrichtung (23) zum Arretieren des Schutzgitters in einer etwa dachparallelen Lage angeordnet.

Fig.2

## Schutzeinrichtung für den Innenraum von Kraftfahrzeugen

Die Erfindung betrifft eine Schutzeinrichtung für Kraftfahrzeuge zur Abtrennung des Fahrerraums von einem dahinter liegenden Transportraum mit einem an den Dachholmen des Fahrzeugs festgelegten, sich vom Dach bis zumindest zur Oberkante der Rückenlehnen der Sitze im Fahrerraum sowie zwischen den Seitenfenstern erstreckenden, auf unterschiedliche Fahrzeug-Innenmaße einstellbaren Schutzgitter.

Schutzeinrichtungen der vorgenannten Art sind in einer Vielzahl von Ausführungsformen bekannt. Sie dienen dazu, den Fahrerraum von einem hinter den Vordersitzen befindlichen oder in einen solchen umwandelbaren Transportraum abzutrennen. Sie werden bei im wesentlichen gleichem Aufbau sowohl in PKWs, als auch in Lieferwagen, Klein-LKWs etc. eingesetzt. Die vornehmliche Aufgabe solcher Schutzgitter besteht darin, den Fahrerraum vor Gegenständen zu schützen, die sich im Transportraum befinden und sich während der Fahrt oder in kritischen Betriebssituationen in Bewegung setzen könnten. Auch beim Transport von Tieren, insbesondere Haustieren, verhindert ein solches Schutzgitter, daß das Tier auf die Vordersitze gelangen kann.

Die bekannten Schutzeinrichtungen dieser Art sind entweder fest montiert oder innerhalb der Fahrgastzelle lösbar verspannt. Bei letzterer Ausführung reichen die Schutzgitter häufig unnötigerweise bis zum Boden, um zwischen Dach und Boden verspannt werden zu können. Da das Verspannen mit erheblichem Zeitaufwand verknüpft ist, wird von dieser Lösbarkeit nur in seltenen Fällen Gebrauch gemacht, so daß das Schutzgitter häufig auch dann in der Gebrauchslage verbleibt, wenn es an sich nicht benötigt wird. Dies stört nicht nur in optischer Hinsicht, sondern läßt auch die durch das Schutzgitter bedingten eingeschränkten Sichtverhältnisse nach hinten über eine unnötig lange Zeitdauer anhalten. Ferner können der Fahrer bzw. der Beifahrer nicht nach hinten in den Transportraum langen. Vor allem beim Einsatz des Schutzgitters in solchen Fahrzeugen, die hinter demselben weitere Sitzmöglichkeiten aufweisen, wird das Schutzgitter als störend empfunden.

Der Erfindung liegt die Aufgabe zugrunde, eine Schutzeinrichtung des eingangs genannten Aufbaus so auszubilden, daß sie nach Einbau in das Fahrzeug mit wenigen Handgriffen aus der Gebrauchslage in eine nicht störende Lage gebracht werden kann.

Diese Aufgabe wird erfindungsgemäß dadurch gelöst, daß das Schutzgitter an seiner oberen Längsseite an horizontalen Achsen schwenkbar gelagert ist und daß im Bereich des Dachs eine Einrichtung zum Arretieren des Schutsgitters in einer etwa achsparallelen Lage angeordnet ist.

Durch die Anlenkung des Schutzgitters an horizontalen, dachnahen Achsen kann das Schutzgitter aus seiner etwa senkrechten Gebrauchslage, bei der es den Fahrerraum von dem Transportraum abtrennt, durch Verschwenken an das Dach in eine unwirksame Lage gebracht werden. In dieser Position befindet sich das Schutzgitter praktisch innerhalb der Dachwölbung, so daß es von außen kaum sichtbar ist, dem Fahrer eine ungehinderte Sichtmöglichkeit nach hinten gibt und auch ansonsten in keiner Weise störend wirkt. Ferner ist in dieser Position der Zugriff von den Vordersitzen aus zum Transportraum in keiner Weise mehr behindert. Das Verschwenken des Schutzgitters ist mit einem einzigen Handgriff in kürzester Zeit möglich. Ferner gibt diese Schutzeinrichtung aufgrund der nicht erforderlichen Verspannung die Möglichkeit, den Umriß des Schutzgitters auf den unbedingt notwendigen Querschnitt, nämlich den oberhalb der Oberkanten der Rückenlehne vorhandenen Freiraum zu beschränken. Die Montage des Schutzgitters kann in herkömmlicher Weise an den Dachholmen des Fahrzeugs vorgenommen werden.

Vorzugsweise ist dem Schutzgitter eine Einrichtung zum Arretieren in der etwa senkrechten Lage zugeordnet, um sicherzustellen, daß sich das Schutzgitter in der Gebrauchslage nicht bewegen kann.

Gemäß einem weiteren Ausführungsbeispiel der Erfindung ist ein an den Dachholmen festlegbarer Rahmen vorgesehen, an dessen in Fahrtrichtung vorderer Querseite die Schwenklager für das Schutzgitter vorgesehen sind und der an seiner hinteren Querseite die Einrichtung zum Arretieren des Schutzgitters in der achsparallelen Lage aufweist. Durch diesen Rahmen erfährt das Schutzgitter auch in der dachparallelen Nichtgebrauchslage eine gute Stabilisierung.

In weiterhin bevorzugter Ausführung weist der Rahmen einen vorderen Querholm auf, der seinerseits die Schwenklager für das Schutzgitter bildet. Zu diesem Zweck kann der in der Gebrauchslage obere Holm des Schutzgitters Verbindungstücke aufweisen, mittels der die Lagerung auf dem vorderen Querholm des Rahmens erfolgt.

In weiterer vorteilhafter Ausgestaltung ist die Einrichtung zum Arretieren des Schutzgitters in der senkrechten Lage - der Gebrauchslage - von einer zwischen dem Rahmen und dem Schutzgitter angeordneten, in der gestreckten Lage arretierbaren Knickstrebe gebildet. Die Arretierung dieser Knickstrebe kann beispielsweise dadurch erfolgen, daß diese eine über ihr Knickgelenk schiebbare Hülse aufweist. Knickstreben dieser Art mit Schiebehülse sind in ähnlicher Form bei Beschlägen an Möbeln bekannt.

Schließlich ist mit Vorteil die Einrichtung zum Arretieren des Schutzgitters in der dachparallelen Lage von wenigstens einem am hinteren Querholm des Rahmens gelagerten, das Schutzgitter untergreifenden Fangbügel gebildet. Ein solcher Fangbügel hält das Schutzgitter sicher in der Nichtgebrauchslage. Dieser Fangbügel kann gegebenenfalls noch federnd ausgebildet sein, um ein Einrasten des Schutzgitters in der Nichtgebrauchslage für den Benutzer bemerkbar zu machen und das Schutzgitter sicher zu positionieren.

Nachstehend ist die Erfindung anhand eines in der Zeichnung wiedergegebenen Ausführungsbeispiels beschrieben. In der Zeichnung zeigen:

Figur 1 eine Ansicht der in ein Fahrzeug eingebauten Schutzeinrichtung von hinten;

Figur 2 einen Schnitt II - II gemäß Figur 1 in der Gebrauchslage der Schutzeinrichtung und

Figur 3 eine der Figur 2 entsprechenden Schnitt in der Nichtgebrauchslage der Schutzeinrichtung.

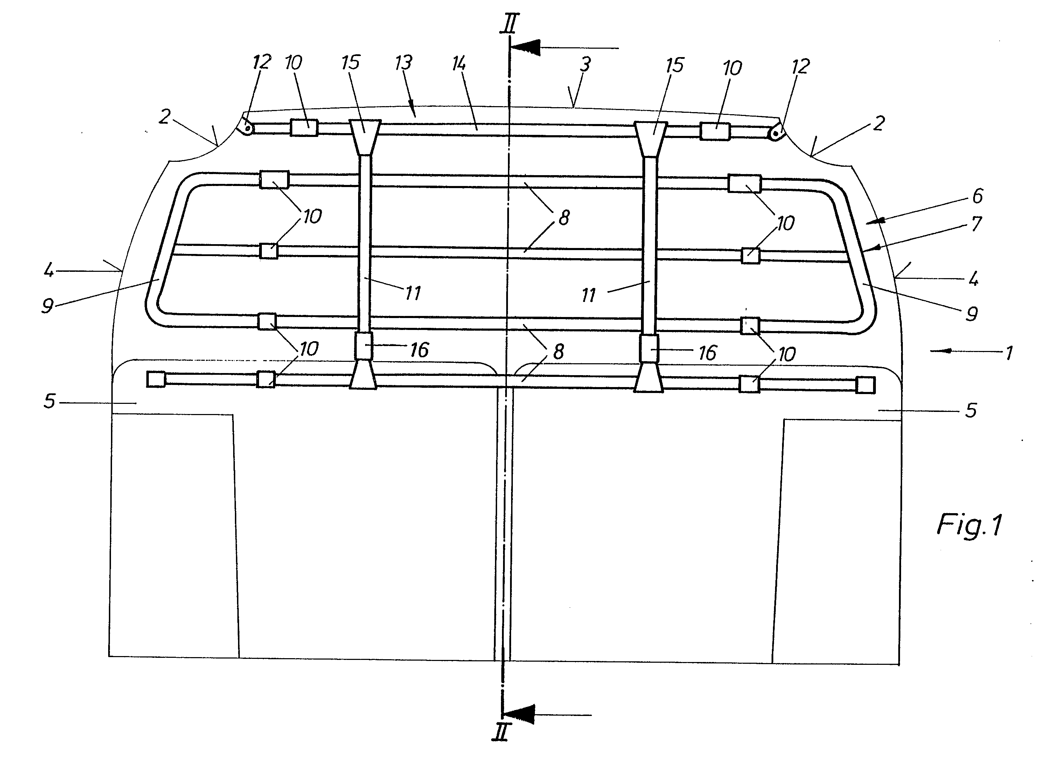

In den Figuren 1 bis 3 ist die Innenkontur des oberen Teils des Wagenkastens 1 eines Kraftfahrzeugs erkennbar, insbesondere sind die Konturen der längsverlaufenden Dachholme 2, des Dachs 3 und der Seitenholme bzw. Fenster 4 zu sehen. Ferner sind die Rückenlehnen 5 der Vordersitze angedeutet. Im Bereich unmittelbar hinter den Rückenlehnen 5 ist eine Schutzeinrichtung 6 angeordnet, die im wesentlichen von einem Schutzgitter 7 gebildet ist.

Das Schutzgitter 7 erstreckt sich zwischen dem Dach und bis unter die Oberkante der Rückenlehnen 5 einerseits sowie zwischen den Seitenkonturen 4 des Wagenkastens andererseits. Es besteht aus einer Mehrzahl von querverlaufenden, parallelen Stäben 8, die an ihren Enden über gebogene Holme 9 verbunden sind. Beim gezeigten Ausführungsbeispiel kann das Schutzgitter 7 durch Verschieben der Stäbe 8 in Klemmhülsen 10 auf unterschiedliche lichte Weiten der Fahrgastzelle eingestellt werden.

Das Schutzgitter 7 kann ferner Querstäbe 11 aufweisen, wobei das gezeigte Ausführungsbeispiel zwei solcher Stäbe besitzt, die zugleich als Träger für das Schutzgitter 7 dienen.

An den Dachholmen 2 des Wagenkastens sind Laschen 12 befestigt, an die wiederum ein Halterahmen 13 angelenkt ist. Der Halterahmen 13 kann gleichfalls mittels Klemmhülsen 10 auf unterschiedliche lichte Weiten eingestellt werden.

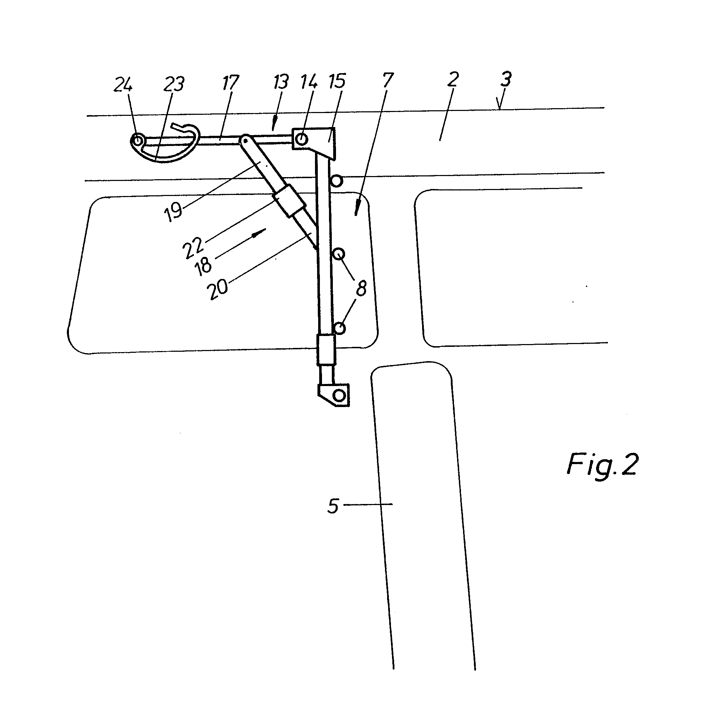

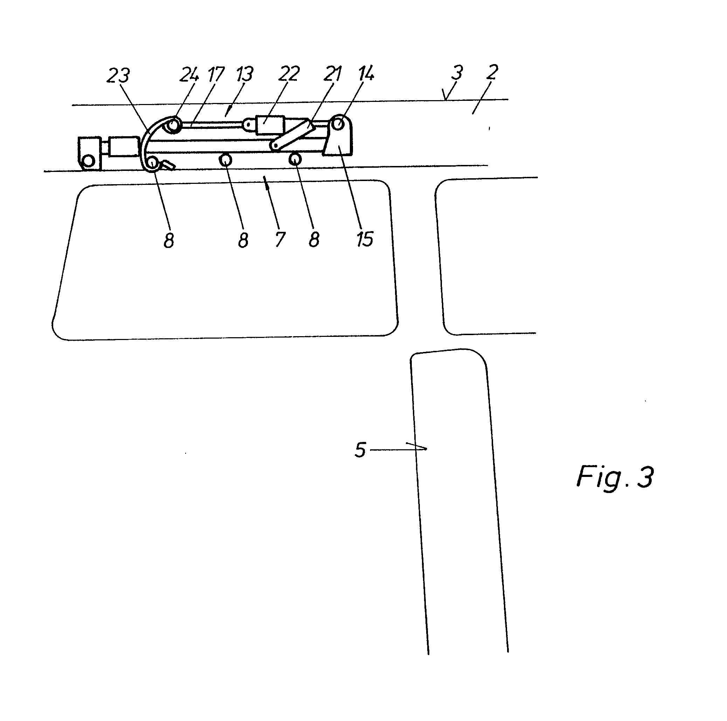

An dem vorderen Holm 14 des Halterahmens 13 sind die Querstäbe 11 über Verbindungsstücke 15 schwenkbar gelagert derart, daß das Schutzgitter 7 aus der in Figur 2 wiedergegebenen Gebrauchslage, in der es etwa senkrecht vom Dach nach unten reicht, in die in Figur 3 wiedergegebene dachparallele Nichtgebrauchslage geschwenkt werden kann. Der vordere Holm 14 des Halterahmens 13 dient also als Schwenkachse für das Schutzgitter 7. Im übrigen sind auch die Querstäbe 11 mittels Klemmhülsen 16 in der Höhe verstellbar, so daß das Schutzgitter auch an unterschiedliche Rückenlehnen-Höhe angepaßt werden kann.

Zwischen dem Halterahmen 13 und dem Schutzgitter 7 bzw. zwischen den seitlichen Holmen 17 des Halterahmens 13 und den Querstäben 11 des Schutzgitters 7 ist eine Einrichtung zum Arretieren des Schutzgitters inde Gebrauchslage gemäß Figur 2 vorgesehen, die beim gezeigten Ausführungsbeispiel als Knickstrebe 18 ausgebildet ist. Sie besteht aus zwei Schenkeln 19, 20, die über ein Knickgelenk 21 (Figur 3) in Verbindung stehen. In der Gebrauchslage des Schutzgitters (Figur 2) befindet sich die Knickstrebe 18 in der gestreckten Lage, in der sie mittels einer Schiebehülse 22 gegen Ausknicken gesichert ist. Durch Verschieben der Schiebehülse 22 auf dem Schenkel 19 kann die Knickstrebe nach Freigabe des Knickgelenks 21 eingeknickt und das Schutzgitter 7 aus der Gebrauchslage gemäß Figur 2 in die Nichtgebrauchslage gemäß Figur 3 geschwenkt werden.

Um das Schutzgitter 7 in der dachparallelen Nichtgebrauchslage (Figur 3) zu sichern, ist bei dem gezeigten Ausführungsbeispiel eine Arretiereinrichtung in Form eines Fangbügels 23 vorgesehen, der am hinteren Querholm 24 des Halterahmens 13 gelagert ist und einen der Längsholme 8 des Schutzgitters 7 untergreift. In der Gebrauchslage gemäß Figur 2 kann der Fangbügel 17 durch geeignete Mittel am Halterahmen 13 fixiert werden.

**Ansprüche**

1. Schutzeinrichtung für Kraftfahrzeuge zur Abtrennung des Fahrerraums von einem dahinter liegenden Transportraum mit einem an den Dachholmen des Fahrzeugs festgelegten, sich vom Dach bis zumindest zur Oberkante der Rückenlehnen der Sitze im Fahrerraum sowie zwischen den Seitenfenstern erstreckenden, auf unterschiedliche Fahrzeug-Innenmaße einstellbaren Schutzgitter, daduch gekennzeichnet, daß das Schutzgitter (7) an seiner oberen Längsseite an horizontalen Achsen (14) schwenkbar gelagert ist und daß im Bereich des Dachs (3) eine Einrichtung (23) zum Arretieren des Schutzgitters in einer etwa dachparallelen Lage angeordnet ist.

2. Schutzeinrichtung nach Anspruch 1, dadurch gekennzeichnet, daß dem Schutzgitter (7) eine Einrichtung (18) zum Arretieren in der etwa senkrechten Gebrauchslage zugeordnet ist.

3. Schutzeinrichtung nach Anspruch 1 oder 2, dadurch gekennzeichnet, daß ein an den Dachholmen (3) festlegbarer Rahmen (13) vorgesehen ist, an dessen in Fahrtrichtung vorderen Querseite (14) die Schwenklager für das Schutzgitter (7) vorgesehen sind und der an seiner hinteren Querseite (24) die Einrichtung (23) zum Arretieren des Schutzgitters (7) in der dachparallelen Lage aufweist.

4. Schutzeinrichtung nach einem der Ansprüche 1 bis 3, dadurch gekennzeichnet, daß der Rahmen (13) einen vorderen Querholm (14) aufweist, der die Schwenklager für das Schutzgitter (7) bildet.

5. Schutzeinrichtung nach einem der Ansprüche 1 bis 4, dadurch gekennzeichnet, daß die Einrichtung zum Arretieren des Schutzgitters (7) in der senkrechten Lage von einer zwischen dem Rahmen (13) und dem Schutzgitter (7) angeordneten, in der gestreckten Lage arretierbaren Knickstrebe (18) gebildet ist.

6. Schutzeinrichtung nach einem der Ansprüche 1 bis 5, dadurch gekennzeichnet, daß die Knickstrebe (18) eine über ihr Knickgelenk (21) - schiebbare Hülse (22) aufweist.

7. Schutzeinrichtung nach einem der Ansprüche 1 bis 6, dadurch gekennzeichnet, daß die Einichtung zum Arretieren des Schutzgitters (7) in der dachparallelen Lage von wenigstens einem am hinteren Querholm (24) des Rahmens (13) gelagerten, das Schutzgitter untergreifenden Fangbügel (23) gebildet ist.

Fig.1

Fig.2

0 289 832

23  24 17  13  22  21  14          3  2

8    8   7   8    15

5 —>

Fig. 3

0 289 832

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 147 785 (AUDI NSU AUTO UNION) * Insgesamt * --- | 1,2 | B 60 R 21/02 |
| A | US-A-2 998 279 (MATENY) * Insgesamt * --- | 1 | |
| X | US-A-3 044 821 (WICKER) * Insgesamt * --- | 1,2 | |
| X | US-A-2 865 670 (DUNN) * Insgesamt * --- | 1,2 | |
| A | FR-A-2 481 661 (VANDAMME) * Insgesamt * ----- | 1,2,4 | |

RECHERCHIERTE SACHGEBIETE (Int. Cl.4)

B 60 R

Der vorliegende Recherchenbericht wurde für alle Patentansprüche erstellt

| Recherchenort | Abschlußdatum der Recherche | Prüfer |
|---|---|---|
| DEN HAAG | 17-08-1988 | DUBOIS B.F.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................................................
& : Mitglied der gleichen Patentfamilie, übereinstimmendes Dokument

EPO FORM 1503 03.82 (P0403)